# EUROPEAN PATENT APPLICATION

(11) **EP 4 733 962 A1**
(43) Date of publication of application: **29.04.2026**
(21) Application number: 24208737.7
(22) Date of filing: 24.10.2024
(51) Int. Cl.: G06F 21/10, G06F 21/60, G06F 21/62, H04L 9/40, H04W 12/08

(54) **CREDENTIAL OBJECTS IN LOW CODE DEVELOPMENT PLATFORMS**

(71) Applicant: Telefonaktiebolaget LM Ericsson (publ), 164 83 Stockholm (SE)
(72) Inventor: Franzon, Björn, 417 56 Göteborg (SE)
(74) Representative: Ericsson

(57) **Abstract**

According to an aspect, there is provided a computer-implemented method for use in a low code development platform, LCDP. The method comprises forming (202) a credential object (101), wherein an application in the LCDP is to use the credential object (101) to access a resource . The credential object (101) comprises credential information and at least one item (105). The at least one item (105) comprises a path (115), a type (113), and a replacement (117). The replacement (117) indicates a value (119) that is to replace the path (115) when the credential object (101) is used by the application. The type (113) determines whether the value (119) is to be obscured in a trace (107) to a user of the application relating to the access of the resource by the application. The method further comprises encrypting (204) the credential object (101) and storing the encrypted credential object (101) for use by the application to access the resource.

## Description

### Technical Field

This disclosure relates to low code development platforms, and in particular to handling of credential objects in low code development platforms.

### Background

A low code development platform (LCDP) enables software applications to be created in a relatively simple and straight forward manner, often by users that do not have extensive coding skills. Software applications can be built up by dragging and dropping blocks in a graphical user interface (GUI) of the LCDP, with some coding if needed).

US 2021/255482 describes a low-code development platform configured to separate a control flow (being the order in which source code or executable code based on the source code is executed) from the actual execution of the source code/executable code so as to enable a user to define one without the other. "Phalake, Vaishali, et al. "Modernized Application Development Using Optimized Low Code Platform." 2022 2nd Asian Conference on Innovation in Technology (ASIANCON). IEEE, 2022, describes a low code system that optimizes generated source code using code optimization and python libraries. "Juhás, Gabriel, et al. "Low-code platforms and languages: the future of software development." 2022 20th International Conference on Emerging eLearning Technologies and Applications (ICETA). IEEE, 2022, discusses that a next generation low-code platform should provide an application builder that will generate code of the application in a supported low-code language.

Executing or using a software application created using a LCDP may require access to information stored in another resource, such as a database. Such access may require the use of a credential object that includes information required to access the database, such as a database name, a path (e.g. Internet Protocol (IP) address), a username (e.g. "admin"), a port (e.g. "5432"), a password, a passcode, etc. In the context of the present disclosure, a username may be considered to be a "simple credential" (that is, a credential that is deemed to not be sensitive and/or private), whereas a password or a passcode may be considered to be a "password credential" (that is, a credential that is deemed to not be sensitive and/or private). The credential object can be stored in the software application.

### Summary

There currently exist certain challenge(s). In particular, operations performed by the software application are recorded or displayed by a trace that is visible to a user of the application. Presently, if a software application is required to access a resource, and this access requires the use of a credential object, the information included in the credential object will be displayed by the trace to the user of the application. This exposure of this information to the application user may raise privacy concerns, for example, when a password included in the credential object is exposed to the application user.

Certain aspects of the disclosure and their embodiments may provide solutions to these or other challenges. Certain aspects of the disclosure provide a user-friendly generic object replacement mechanism that can prevent credential object information (that is required to execute a particular code block) from being displayed to a user in a trace of the execution of said code block. This replacement mechanism does not require framework changes, which require rebuilding and redeployment of the application.

Thus, the disclosed techniques provide that sensitive and/or private information stored in a credential object (e.g. a password, a passcode etc.) required for accessing a resource is encrypted and stored, alongside information relating to the resource and/or accessing the resource. Each entry (or item) in the credential object comprises a path, a type, and a replacement, wherein the replacement indicates a value that is to replace the path when the credential object is used by the application, and wherein the type determines whether the replacement value is to be obscured in a trace to a user of the application relating to the access of the resource by the application.

Certain embodiments may provide one or more of the following technical advantage(s). Certain aspects of the disclosure provide a replacement mechanism that enables the easy replacement of any object structure. The replacement mechanism further enables the application to easily access passwords (that are required to execute a code block and/or access a resource, for example), while keeping these passwords hidden from a graphical user interface. These passwords are protected and encrypted by a credential module, which is encrypted in its entirety. The credential model is generic for any type of object transform.

According to a first aspect, there is provided a computer-implemented method for use in a low code development platform, LCDP. The method comprises forming a credential object, wherein an application in the LCDP is to use the credential object to access a resource, the credential object comprising credential information and at least one item. The at least one item comprises a path, a type, and a replacement. The replacement indicates a value that is to replace the path when the credential object is used by the application, and wherein the type determines whether the replacement value is to be obscured in a trace to a user of the application relating to the access of the resource by the application. The method further comprises encrypting the credential object and storing the encrypted credential object for use by the application to access the resource.

According to a second aspect, there is provided a computer program product comprising a computer readable medium having computer readable code embodied therein, the computer readable code being configured such that, on execution by a suitable computer or processor, the computer or processor is caused to perform the method according to the first aspect, or any embodiment thereof.

According to a third aspect, there is provided a computing device configured to perform the method according to the first aspect, or any embodiment thereof.

### Brief Description of the Drawings

Some of the embodiments contemplated herein will now be described more fully with reference to the accompanying drawings, in which:
Fig. 1 provides an example of the techniques described herein in operation;
Fig. 2 is a flow chart illustrating a computer-implemented method for use in a low code development platform;
Fig. 3 shows an example of a flow that may be executed by an application in accordance with the techniques described herein;
Fig. 4 shows a flow chart and example flows according to the techniques described herein relating to replacement of a string variable;
Fig. 5 shows a flow chart and example flows according to the techniques described herein relating to replacement of a password;
Fig. 6 illustrates a flow in which performs multiple replacements according to the techniques described herein;
Fig. 7 illustrates another flow which performs multiple replacements according to the techniques described herein;
Fig. 8 is a flow chart illustrating the addition of a credential object to a LCDP;
Fig. 9 is a flowchart of a method of generating and using a credential object to access a resource;
Fig. 10 shows various entities of an embodiments of the invention,
Fig. 11 is a block diagram illustrating a computing device that can be configured to perform the techniques described herein.

### Detailed Description

Some of the embodiments contemplated herein will now be described more fully with reference to the accompanying drawings. Embodiments are provided by way of example to convey the scope of the subject matter to those skilled in the art.

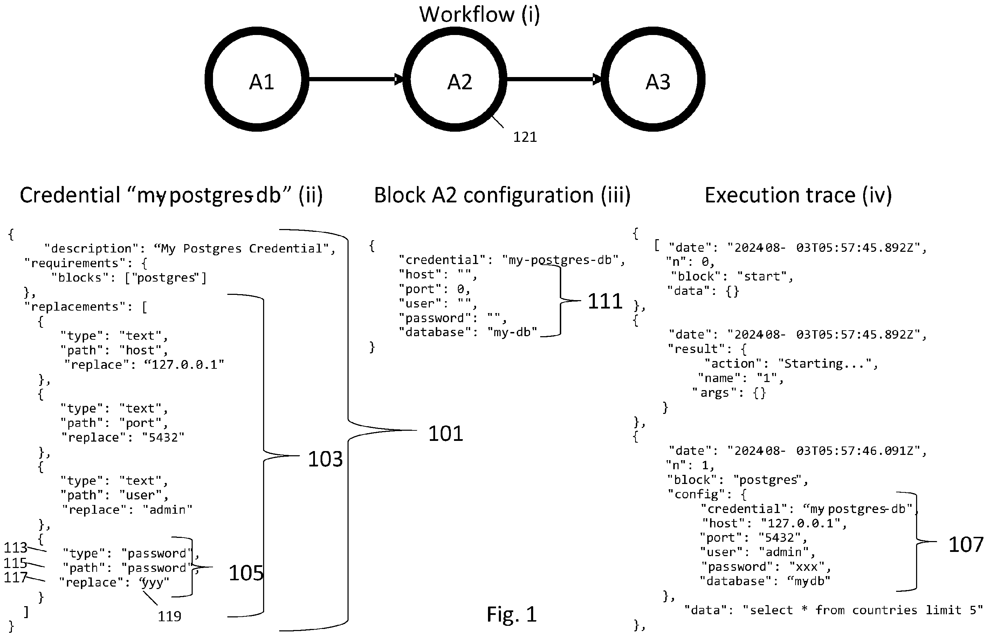

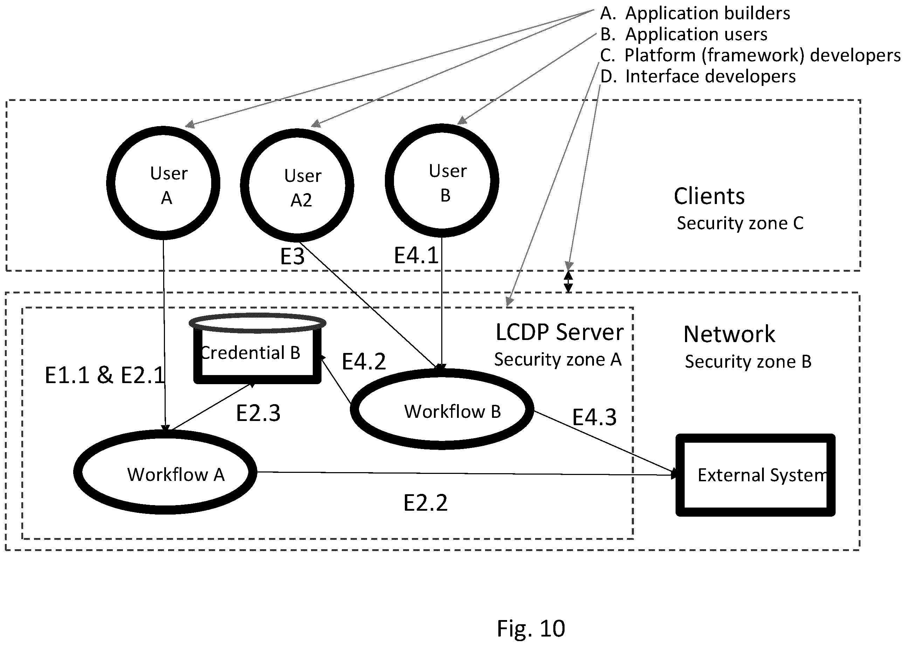

Fig. 1 provides an example of the techniques described herein in operation. Fig. 1 shows several shots of parts of a graphical user interface (GUI) visible to a developer of a software application. Note that, as used herein, a "developer" is someone who creates and/or modifies the software application in the LCDP and has access to, and/or knowledge of, the information in the credential object for a resource used/accessed by the software application. For example, a developer may be an application builder, such as User A described with reference to Fig. 10 below. An application builder (or developer, in the context of the present disclosure), generally speaking, is able to read, write and edit (that is, change or make updates) software applications and workflows in the LCDP.

As used herein, a "user" is someone who makes use of the completed software application in the LCDP, but is not permitted to access, or have knowledge of, certain information in the credential object for the resource (for example, a password). For example, a user may be an application user, such as User B described with reference to Fig. 10 below. An application user (or user, in the context of the present disclosure), generally speaking, is only permitted to read and execute software applications and workflows in the LCDP, but not write (or edit) them.

Separately, platform (framework) developers, and interface developers are described (in contrast to a "developer" or an "application builder" in the context of the present disclosure. An "interface developer" defines the standardized interface for a platform developer to integrate towards. A "platform developer" creates the LCDP server infrastructure.

Briefly, Fig. 1(i) shows an example workflow that comprises three blocks: A1, A2 121, and A3, that are executed in sequence by the software application. One of these blocks, e.g. A2, requires access to a resource, such as a database ("my-db"), to execute a search query. In this example, the resource is a "postgres" database. The configuration of the block A2 comprises a block type 111, which specifies the resource.

According to the techniques described herein, resource information is defined for the resource and stored for use by the software application in the credential object. Fig. 1 (ii) shows an exemplary 'credential configuration' ("my-postgres-db") 101. This credential model is only available to a developer of the software application (for example, an application builder, as described herein), i.e. it is not accessible to a user of the software application (for example, an application user, as described herein).

The credential object 101 stores information 103 relating to the specific postgres database to be accessed, alongside a description which identifies the credential object 101, and one or more requirements permitting when the credential object 101 can be used. The requirements may be included to ensure that the credential is not used in the wrong context to expose the obscured replacement.

In this example the information 103 (included in the credential object) includes several types of data (arranged in items, such as the password 105). The data types include: a host (e.g. the IP address), a port ("5432"), username ("admin"), and a password 105 ("password"). For each type of data, the information 103 includes a "replace" field, and the information in the respective "replace" field is the information that will be used during the execution of the block and/or during access of the resource. The "type" 113 that is associated with each item included in the credential object determines whether or not the value in the "replace" field will be displayed in a trace to the user of the software application. In this example, if the item is associated with the type "password", the value of the "replace" field for the password will be obscured from the trace displayed to the user of the software application. For example, a dummy value (for example, "xxx") may be displayed in the trace for items of the type "password". The developer can include alternative/different information to what is defined in the "path" 115 field in the "replace" field. For the password 105, the "replace" field contains an actual value for the password, i.e. the value "yyy" 119. Similarly, for the other types of information defined in the credential object, the "replace" 117 field also contains the actual value. However, in this example, because the password 105 is of the type "password", the value of the "replace" field of the password will be obscured from the trace displayed to the user of the software application. Instead, a dummy value for the password (e.g. "xxx") will be displayed for the password in the trace when block A2 is executed and the postgres database accessed.

It should be noted that once the information 103 in the credential object 101 is defined by the developer (for example, an application builder, as described herein) and stored, the credential object is encrypted in its entirety, so the user (for example, an application user, as described herein) is not able to determine the information in the credential object from the credential object itself.

Fig. 1(iii) shows the code executed by block A2, and it can be seen that block A2 calls the credential object "my-postgres-db". In doing so, the software application uses the information 103 included in the credential object shown in Fig. 1(ii) to find and query the postgres database.

Fig. 1(iv) shows part of a trace that will be displayed to a user of the software application (for example, an application user, as described herein) after executing block A2. In particular, the trace shows the result 107 of executing the "postgres" block, and includes the resource information from the "replace" fields in the "my-postgres-db" information 103, except for the "replace" field for the item with the type "password". Instead, the password is shown as the dummy value "xxx", meaning that the user will not be able to learn the password 105 from the trace.

Some examples of multiple replacement are described further below, and an example of multiple replacement can be seen in Fig. 1 as the value for "database" can be taken from the configuration shown in Fig. 1(iii), and the values for the "host", "user", "password" and "port" can be taken from the credential configuration in Fig. 1(ii).

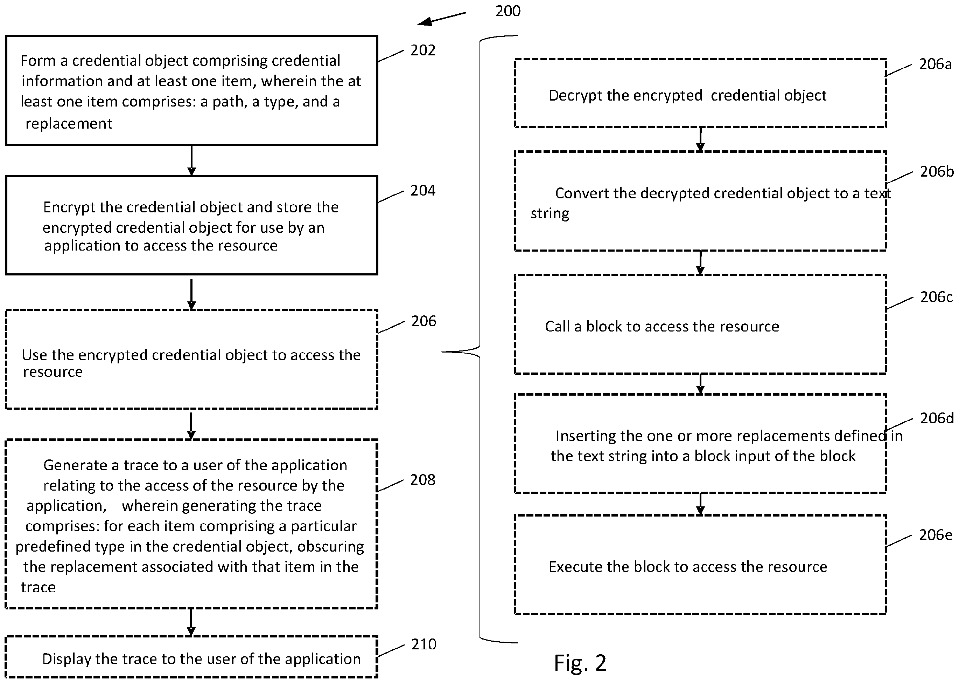

Fig. 2 is a flow chart illustrating a computer-implemented method 200 for use (for example, by a developer or "application builder" described herein) in a low code development platform. A computing device may perform the method in response to executing suitably formulated computer readable code. The computer readable code may be embodied or stored on a computer readable medium, such as a memory chip, optical disc, or other storage medium. The computer readable medium may be part of a computer program product.

At step 202, the method 200 comprises forming a credential object, wherein an application in the LCDP is to use the credential object to access a resource. The credential object comprises credential information and at least one item. The credential information may identify a block (for example, a code block) that is to be called and executed in order for the application to access the resource. The at least one item comprises a path, a type, and a replacement. The replacement indicates a value that is to replace the path when the credential object is used by the application, and the type determines whether the replacement value is to be obscured in a trace to a user of the application (for example, an application user, as described herein) relating to the access of the resource by the application. For example, the type may be "password", and may be associated with one or more of: a password, a passcode, and a character string (or any other information deemed sensitive and/or private). The at least one item may therefore define information required for the application to access the resource. For example, each item in the credential object may comprise information required for accessing the resource, such as a resource name, a host (e.g. Internet Protocol (IP) address), a username (e.g. "admin"), a port (e.g. "5432"), a password (e.g. "yyy").

In some embodiments, each path defined in the credential object indicates a path defined in a block input of a block that is to be called and executed in order for the application to access the resource.

In some embodiments, the replacement may comprise any one of a: a password, a passcode, a character string, a resource name, a path to the resource, an Internet Protocol, IP, address, a username, and a port.

At step 204, the method 200 encrypts the credential object and stores the encrypted credential object for use by an application to access the resource. The application is to use the credential object to access a resource, for example a database, encapsulated storage or key value storage. In some examples, encrypting and storing the credential object may comprise converting the entire credential object to a readable text string (e.g. in JavaScript, the function JSON.stringify(object) may be used), encrypting the readable text string to obtain an encrypted text string, and storing the encrypted text string.

Optionally, at step 206, the method 200 comprises, when the application is to access the resource (for example, wherein the application has been executed by a user, or an "application user", as described herein), using the encrypted credential object to access the resource. Optionally, using the encrypted credential object to access the resource comprises decrypting the encrypted credential (as illustrated in step 206a), converting the decrypted credential to a text string ((as illustrated in step 206b), calling a block to access the resource (as illustrated in step 206c), inserting the one or more replacements defined in the text string into a block input of the block (as illustrated in step 206d), and executing the block to access the resource (as illustrated in step 206e).

That is, in these embodiments, the "replace" values defined in the credential object are used to access the resource.

Optionally, at steps 208 and 210, the method 200 comprises generating and displaying a trace to a user of the application (for example, an application user, as described herein) relating to the access of the resource by the application. Generating the trace may comprise, for each item comprising a particular predefined type in the credential object, obscuring the replacement associated with that item in the trace. For example, the replacement values associated with the type "password" in the credential object may be obscured in the trace.

In these examples, the generated trace will include the "replace" values for each item that is not of the type "password" in the credential object, and a dummy value or nothing for each item that is of the type "password" in the credential object. That is, in the trace, a dummy value or no value for each item of the type "password" in the credential object is displayed, and the actual "replace" value of these items is hidden from the user of the application in the graphical user interface. However, as noted above, the resource was accessed with the correct, encrypted, "replace" value.

Thus, the method 200 may enable the encrypted credential object to be used to access the resource, while hiding sensitive and/or private information defined in the credential object from the user through the displaying of dummy values or no values for this information.

The credential object may be stored as an encrypted software object, such as a JavaScript Object Notation (JSON) object. The encryption protects the entire credential object from storage exposure (i.e. prevents a user from observing the full content of the resource, including the sensitive and/or private information associated with the type "password").

The credential object may specify a number of path replacements for each of one or more simple credentials (such as usernames, or other credentials that are not deemed sensitive and/or private) and/or one or more password credentials (such as passwords, passcodes, or other credentials that are deemed sensitive and/or private). These path replacements may replace the text of the one or more simple credentials and the one or more password credentials. For the simple credentials, the values that are shown in the trace of the code block being executed are the replacement values that are used by the application upon accessing the resource. For the password credentials, the replacement values (that is, the real values) are used by the application upon accessing the resource, however, these replacement values are obscured from the trace of the code block being executed. Instead, dummy values for the password credentials (as opposed to the replacement values) may instead be shown in the trace of the code block being executed, or no value may be shown.

As noted above, the resource may be a database. In another example, the information in the credential object may relate to browser rendering, and the attributes (or items) defined in the information in the credential object may be a number of names. The attributes defined in the information on the credential object may be any of an IP address, a password, a table comprising a number of rows, etc., as long as these attributes are represented as an object (for example, a simple string is an object).

Generally speaking, a path may represent a computer file structure in object form. For example, if a path is /c/prog/my-prog, it will remove all the files and directories in this location, and replace them with new files and directories (that are defined in a replacement for this path). In this example, in a computer program upgrade of my-prog, it may also be required to update /c/system/config as well.

In embodiments in which the information in the credential object is stored as an entire object, it is not possible to replace part of it to inject a false configuration (such as changing the path/destination), protecting the credential object from modification or exposure by sending it to a compromised destination.

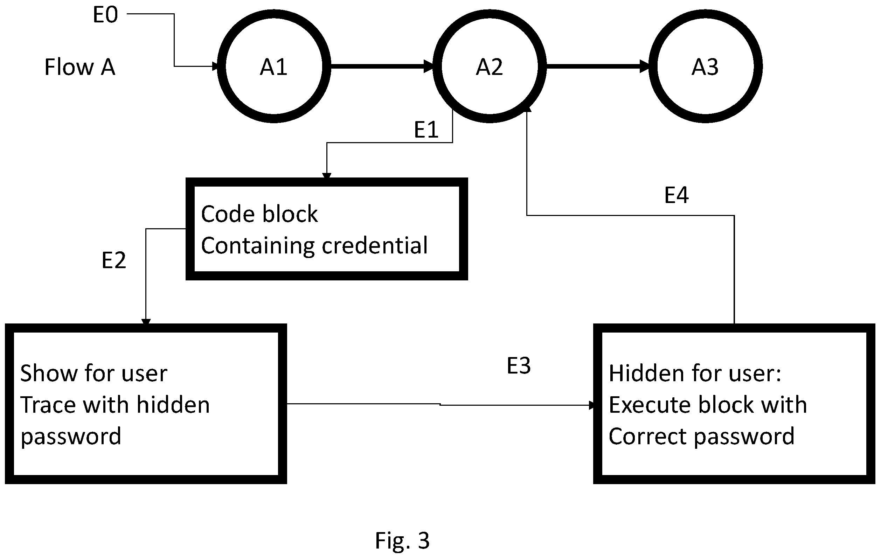

Fig. 3 shows a flow A (as represented by a workflow engine) that may be executed by an application in accordance with at least some of steps of the method 200 described above.

At step E0, the flow A is triggered. The flow A then proceeds to the first code block A1, which is then executed. The flow A then proceeds to code block A2, which requires use of a credential object (as shown at step E1). The credential object has previously been encrypted and stored prior to its use by the code block A2.

The credential object comprises information relating to the resource that is to be accessed. For example, where the resource is a database, the information may comprise a database name, a path (e.g. IP address), a username (e.g. "admin"), a port (e.g. "5432"), a password (e.g. "yyy"), etc.

At step E2, the application generates and displays a trace to a user of the application relating to the access of the resource by the application. Generating the trace comprises, for each item comprising a particular predefined type in the credential object, obscuring the replacement associated with that item in the trace. In this example, the generated trace therefore includes the "replace" values for each item that is not of the type "password" in the credential object, and a dummy value for each item that is of the type "password" in the credential object. That is, in the trace, a dummy value for the items of the type "password" in the credential object is displayed, and the actual "replace" value of these items is hidden from the user of the application in the graphical user interface. For example, the user may be displayed a trace comprising the username "admin", a port "5432" and a password "xxx", as shown in Fig. 1(iv). In this example, the user is therefore shown a trace from which the password (with the real (or actual) value "yyy") has been hidden.

At step E3, which occurs at generally the same time as step E2, the application accesses the particular resource using the "replace" values defined in the credential object (that is, the real "replace" values defined in the credential object that has previously been encrypted and stored, and not the dummy value(s) displayed in the trace). For example, a database may be accessed using the real ("replace") value of the password, despite the user only being shown the dummy value of the password in the trace. Following this, information queried from the database is returned to the application at step E4, and the flow A then proceeds to code block A3, which is then executed.

In this example, as the resource information object is encrypted as a whole, the real value of the password is unable to be extracted from the trace that is displayed in the graphical user interface.

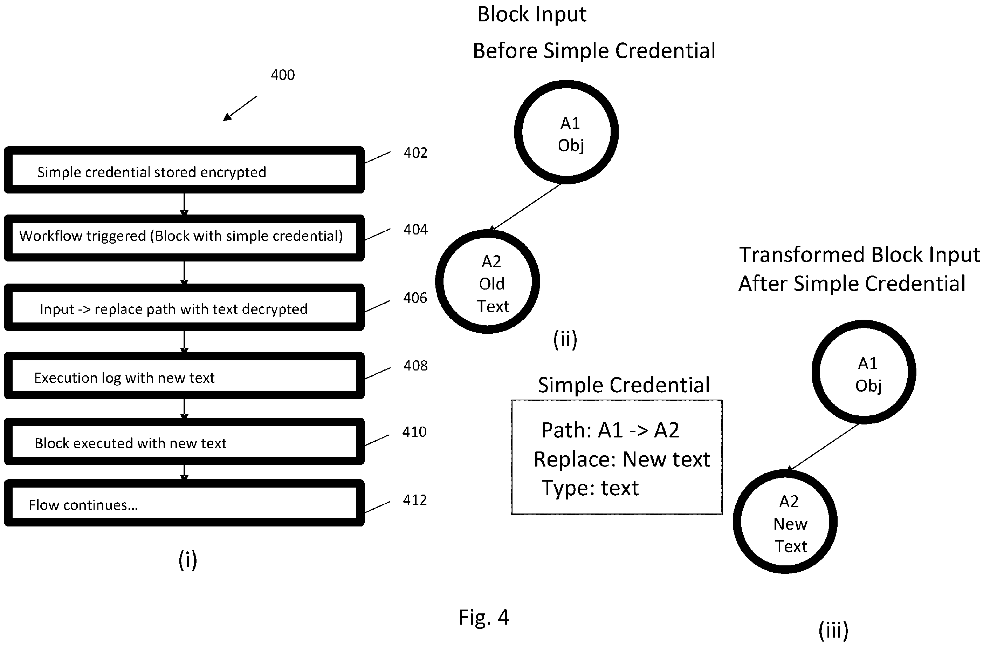

Fig. 4(i) shows an example method 400 of simple credential replacement according to the techniques described herein. The method 400 may be performed in accordance with at least some of steps of the method 200 described above.

In step 402, a simple credential is encrypted and stored in encrypted form. A simple credential function may be a variable. It will be appreciated that step 402 corresponds to step 204 described above.

The simple credential may be part of a credential object (as described above) that is encrypted as a whole, and which may comprise additional information relating to a resource and/or access of a resource such as a port number, an IP address, etc. The simple credential may be an item of a credential object, as described above. It will be appreciated that encrypting such a credential object in its entirety prevents any value or information in the credential object from being tampered with and/or modified.

At step 404, a workflow (for example, the flow A described above with reference to Fig. 3) is triggered. In this example, the flow A comprises a code block A2 that is to be executed that uses the simple credential to access a resource. It will be appreciated that step 404 corresponds to step 206c described above.

At step 406, the block input shown in Fig. 4(ii) is converted or transformed before the block is executed, into the form shown in Fig. 4(iii) (that is, step 406 replaces the old text with the decrypted (new) text for the simple credential in the block input). It will be appreciated that step 406 corresponds to step 206d described above.

At step 408, the application generates and displays an execution log (trace) to a user of the application relating to the access of the resource by the application. The trace includes the "replace" value of the simple credential (that is, the "new text", specified in the "Replace" field of the simple credential). It will be appreciated that step 408 corresponds to step 208 and 210 described above.

At step 410 (which can occur before, at the same time as, or after, step 408), the application executes the code block comprising the simple credential to access the resource, and uses the proper value (that is, the "replace" value) of the simple credential to access the resource. It will be appreciated that step 410 corresponds to step 206e described above.

At step 412, the workflow then continues.

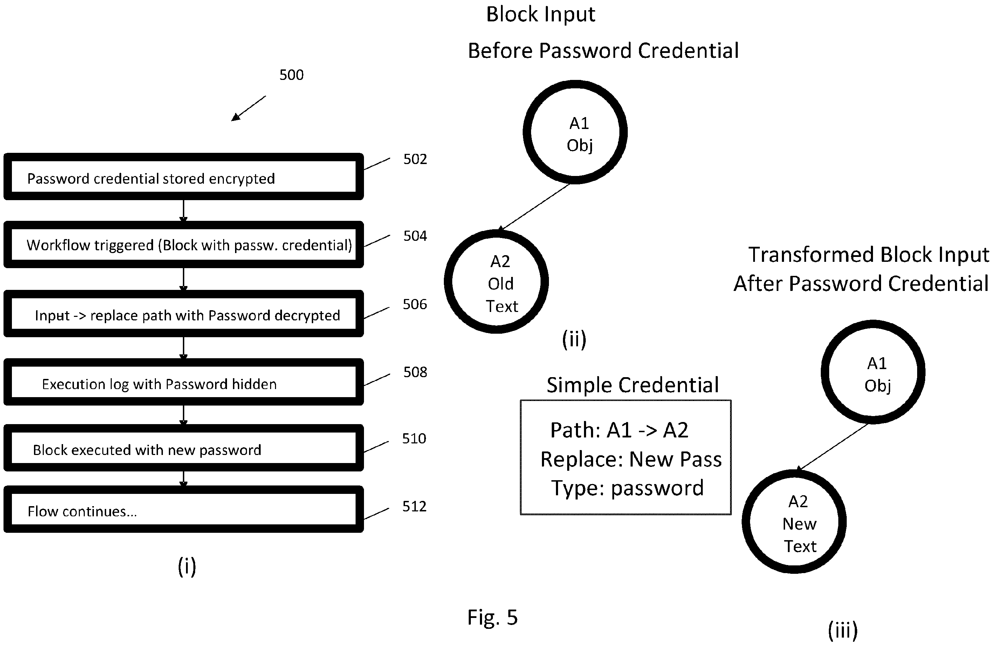

Fig. 5(i) shows an example method 500 of password replacement according to the techniques described herein. The method 500 may be performed in accordance with at least some of steps of the method 200 described above.

At step 502, a password credential is encrypted and stored in encrypted form. The password credential may be part of a credential object that is encrypted as a whole, and which may comprise additional information relating to a resource and/or access of a resource such as a port number, an IP address, etc. The password credential may be an item of a credential object, as described above. It will be appreciated that encrypting such a credential object in its entirety prevents any value or information in the credential object from being tampered with and/or modified. It will be appreciated that step 502 corresponds to step 204 described above.

At step 504, a workflow (for example, the flow A described above with reference to Fig. 3) is triggered. In this example, the workflow comprises a code block A2 that is to be executed, that uses the password credential to access a resource. It will be appreciated that step 504 corresponds to step 206c described above.

At step 506, the path for the password in the block input shown in Fig. 5(ii) is replaced with the "replace" value for the password. The result of executing step 506 is illustrated in Fig. 5(iii), where the replacement defined in the Password Credential referred to in step 502, and shown in Fig. 5, has been applied in the origin block configuration (shown in Fig. 5(ii)). It will be appreciated that step 506 corresponds to step 206d described above.

At step 508, the application generates and displays an execution log (trace) to a user of the application relating to the access of the resource by the application. The trace includes a dummy value of the password credential (for example, "xxx"), which means that the actual password (that is, the "replace" value for the password) is hidden from the user. It will be appreciated that step 508 corresponds to step 208 and 210 described above.

At step 510 (which can occur before, at the same time as, or after, step 508), the application executes the code block comprising the password credential to access the resource, and uses the real value (that is, the "replace" value) of the password credential to access the resource. It will be appreciated that step 510 corresponds to step 206e described above.

At step 512, the workflow then continues.

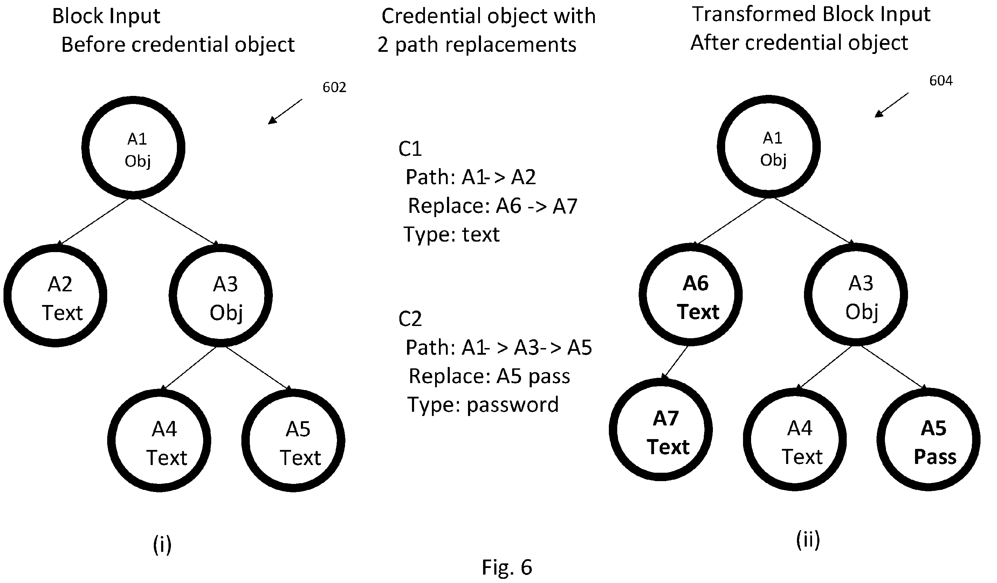

An example of a block input with multiple replacements is now described with reference to Fig. 6. Fig. 6 shows an example of advanced replacement, where respective paths in the block input shown in Fig. 6(i) are replaced with firstly an object ("A6->A7", as defined in the first item C1 in a credential object), and following this, a password ("A5 pass", as defined in the second item C2 in the credential object). Fig. 6(ii) then shows the transformed block input following these path replacements defined in the credential object. Fig. 6 therefore shows an example of multiple replacement in which the multiple replacement adds an object to the left hand side of Fig. 6(ii) (the path "A1->A2", as defined in the first item C1), and only text to the right hand side of Fig. 6(ii) (the path "A1->A3->A5", as defined in the second item C2). With reference to the file structure example described earlier, in such a case, the first replacement would insert a directory with a text file, and the second replacement would insert a password file without a directory. In other examples, other file types in an object could be an array, an integer, a string, a number, or an object.

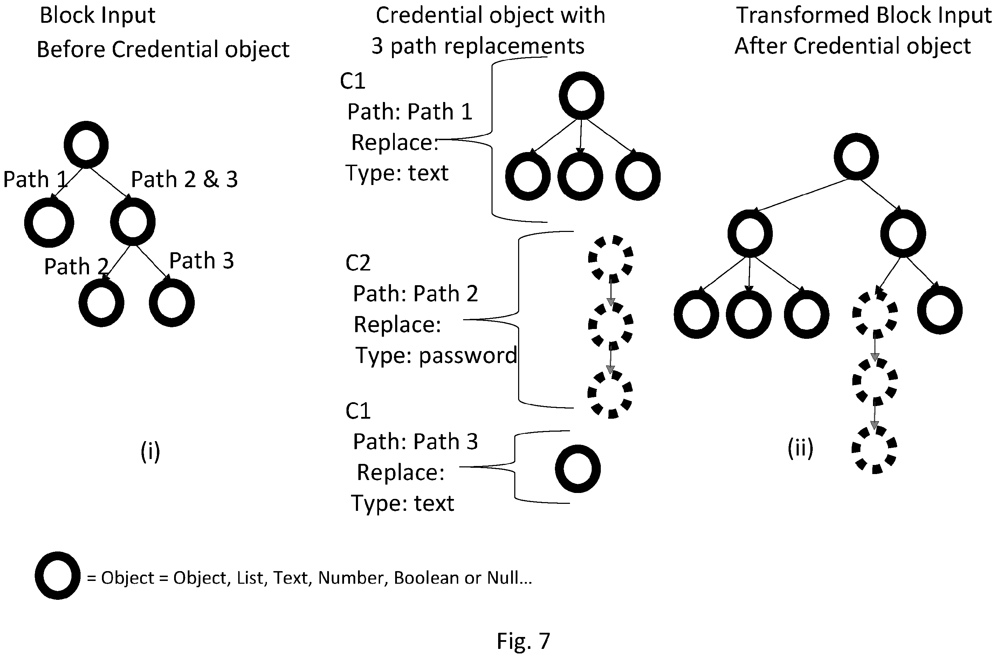

An example of a block input with a generic replacement is now described with reference to Fig. 7. Fig. 7 shows an example of a multiple replacement, where respective paths in the block input shown in Fig. 7(i) are replaced with firstly an object (the "Path 1" replacement, defined in the first item C1 in a credential object), then a password (the "Path 2" replacement, the "Path 1" replacement, defined in the second item C2 in the credential object), and then another object (the "Path 3" replacement, the "Path 1" replacement, defined in the third item C3 in the credential object). Fig. 7(ii) then shows the transformed block input following these path replacements defined in the credential object. Fig. 7 therefore shows an example of multiple replacement in which the multiple replacement adds an object to the left hand branch of Fig. 7(ii) ("Path 1", as defined in the first item C1), a password to text to the central branch of Fig. 7(ii) ("Path 2", as defined in the second item C2), and another object to the right hand branch of Fig. 7(iii) ("Path 3", as defined in the third item C3). As shown in Fig. 7 (and described above, an object may be any of: a list, text, a number, a Boolean value, a null value, etc.

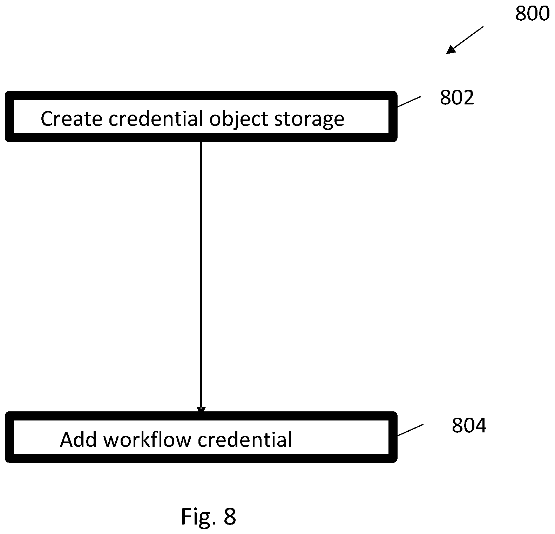

An example method 800 of how a credential object may be added to a Low-Code Development Platform (LCDP) is now described with reference to Fig. 8.

In a first step 802, an object storage is added to the LCDP. It should be possible to path query the object storage, and the object may be represented as a tree structure. The object should at least contain a key, a path, a replacement, and optionally, requirements. The key is a unique object identifier, and typically is a string. For example, for a credential object, the string may be "my-credentials", uniquely identifying the credential object. The credential object may further comprise a list comprising a path, a type, and a replacement. The "path" is a query path for the target input object. The path may be a string, for example, "root->tree1->tree2...". The "replacement" identifies an object to replace the matching path. The "type" identifies text or a password, and controls if the replacement object should be hidden for the user, or not. The "requirements" are optional requirements for allowing use of the credential object, and typically define a destination, a block type, etc.

The entire credential object is encrypted and stored in encrypted form, and only allows for full object updates. This encryption requires all replacements of the type "password" to be recreated at updates, and effectively "locks" the entire object as an entity.

In a second step 804, a workflow credential is added. In a code block of an LCDP, the option to use a credential object uniquely identified by a credential key is added. The use of the credential object is a pre-step to the block execution. The application may only be allowed to use the credential object if the credential object requirements are fulfilled. The application may then use the block input object and apply the list of path, type and replacement to transform the object. In this example, the "type" password remains hidden for client logging of LCDP, but is still able to be used in execution (as described above).

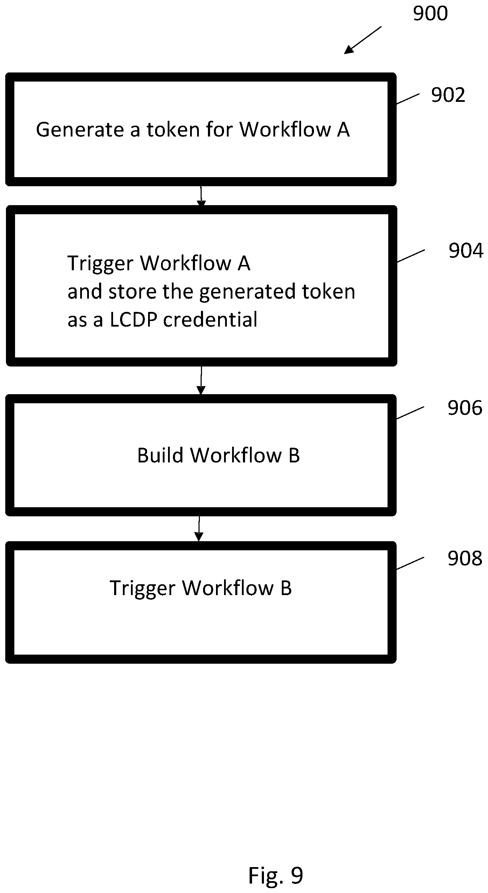

Fig. 9 is an example of method of generating and using a credential object to access a resource (for example, an external system).

At step 902, a developer of the application, application builder, User A, generates a token for Workflow A. The Workflow A can handshake with an external system (for example, OAuth or SSH-keys) through the use of external system credentials that only User A has access to (as defined in the generated token). Step 902 corresponds to step E1.1 as illustrated in Fig. 10.

At step 904, Workflow A is triggered by User A and the generated token is stored as a LCDP credential object, Credential B, with the type "password" and a requirement. In this example, the requirement defines that only a particular application user, User B, is allowed to use Credential B. Step 904 corresponds to steps E2.1, E2.2 and E2.3 as illustrated in Fig. 10, in which the Workflow A is triggered by User A (step E2.1), Workflow A accesses the external system through the use of the generated token (step E2.2) and the generated token is stored as a LCDP credential object, Credential B (step E2.3).

At step 906, a developer of the application, application builder, User A2, builds another workflow B, which uses Credential B to connect to the external system. Although User A has external system access while User A2 does not, User A2 is still able to build Workflow B, as they are a developer (in the context of the present disclosure). User A2 is able to read and write software applications and workflows in the LCDP. Step 906 corresponds to step E3 as illustrated in Fig. 10.

At step 908, an application user, User B, triggers Workflow B, which uses Credential B to connect to the external system. Step 908 corresponds to steps E3.1, E3.2 and E3.3 as illustrated in Fig. 10, in which the Workflow B is triggered by User B (step E3.1), Workflow B decrypts the Credential B (step E3.2) and the decrypted Credential B is used to access the external system (Step E3.3).

It will be appreciated that the application builders, Users A and A2, may also use the application themselves (in a similar manner to User B). However, only Users A and A2 may write applications.

The aforementioned method enables a developer, User A, to provide access to an external system and share information with a user, User B, for accessing that external system, without providing the encrypted external system credential (which is "locked" as one entity) to User B, in a generic Low-Code object structure. Due to the requirements defined in Credential B, no other user than User B can use the encrypted Credential B. The Workflow execution logs (which are generated according to the methods described herein), hide the token, and the token is not sent to any clients or users (that exist in Security zone C).

With reference to Fig. 10, Security zone A is inside the LCDP application. In a microservice context, Security zone A could be translated to a POD or PODs that build up the LCDP application. If a dedicated LCDP server is used, then Security zone A would then be that dedicated server.

Security zone B is the service provider network where the LCDP application is running, for example a Kubernetes cluster or a virtual/physical machine(s).

Security zone C is an end user client, and is typically a browser where only HTTP/HTTPS traffic is allowed towards Security zone A/B and target an umbrella (ingress) to direct calls towards the different servers/pods where the LCDP is included. For example Security zone C could be the internet or an intranet. Security zone C is usually isolated from Security zone(s) A/B using firewalls and encrypted traffic. The confidentially protects server to client communication by Users A2 and B from intruders. As User A is also protected from the moment the password/credential is updated, in this manner, all trace executions for Users A, A2 and B are protected.

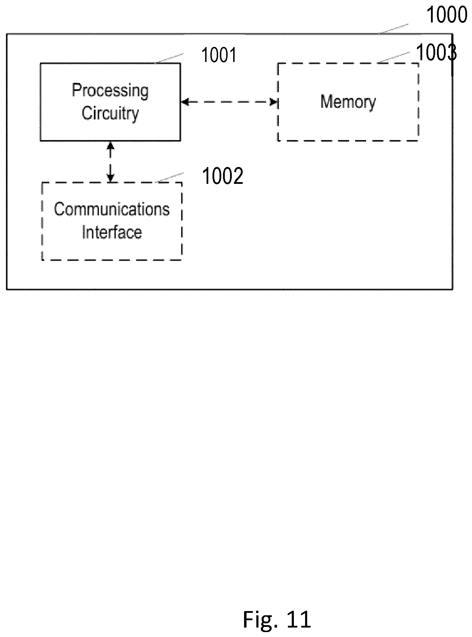

Fig. 11 is a simplified block diagram of an computing device 1000 that can be used to implement, or implement part of, the techniques described herein. In particular, the computing device 1000 may be, or be a part of, a computer or a server. In particular embodiments, the computing device 1000 can be configured or adapted to perform the method according to any one or more of Figs. 2, 4, 5 or 8.

The computing device 1000 comprises processing circuitry (or logic) 1001. It will be appreciated that the computing device 1000 may comprise one or more virtual machines running different software and/or processes. The computing device 1000 may therefore comprise, or be implemented in or as one or more servers, switches and/or storage devices and/or may comprise cloud computing infrastructure that runs the software and/or processes.

The processing circuitry 1001 controls the operation of the computing device 1000 to implement any of the methods described herein. The processing circuitry 1001 can comprise one or more processors, processing units, multi-core processors or modules that are configured or programmed to control the computing device 1000 in the manner described herein. In particular implementations, the processing circuitry 1001 can comprise a plurality of software and/or hardware modules that are each configured to perform, or are for performing, individual or multiple steps of the method described herein in relation to the computing device 1000.

The computing device 1000 also comprises a communications interface 1002. The communications interface 1002 is for use in enabling communications with other computing device, nodes, computers, servers, etc. For example, the communications interface 1002 can be configured to transmit to and/or receive from other nodes, requests, acknowledgements, information, data, signals, or similar. The communications interface 1002 can use any suitable communication technology.

The processing circuitry 1001 may be configured to control the communications interface 1002 to transmit to and/or receive from other nodes, etc. requests, acknowledgements, information, data, signals, or similar, according to the methods described herein.

The computing device 1000 may comprise a memory 1003. In some embodiments, the memory 1003 can be configured to store program code that can be executed by the processing circuitry 1001 to perform the methods described herein in relation to the computing device 1000. Alternatively or in addition, the memory 1003 can be configured to store any requests, acknowledgements, information, data, signals, or similar that are described herein. The processing circuitry 1001 may be configured to control the memory 1003 to store such information therein.

Although the computing devices described herein may include the illustrated combination of hardware components, other embodiments may comprise computing devices with different combinations of components. It is to be understood that these computing devices may comprise any suitable combination of hardware and/or software needed to perform the tasks, features, functions and methods disclosed herein. Moreover, while components are depicted as single boxes located within a larger box, or nested within multiple boxes, in practice, computing devices may comprise multiple different physical components that make up a single illustrated component, and functionality may be partitioned between separate components. For example, a communication interface may be configured to include any of the components described herein, and/or the functionality of the components may be partitioned between the processing circuitry and the communication interface. In another example, non-computationally intensive functions of any of such components may be implemented in software or firmware and computationally intensive functions may be implemented in hardware.

In certain embodiments, some or all of the functionality described herein may be provided by processing circuitry executing instructions stored on in memory, which in certain embodiments may be a computer program product in the form of a non-transitory computer-readable storage medium. In alternative embodiments, some or all of the functionality may be provided by the processing circuitry without executing instructions stored on a separate or discrete device-readable storage medium, such as in a hard-wired manner. In any of those particular embodiments, whether executing instructions stored on a non-transitory computer-readable storage medium or not, the processing circuitry can be configured to perform the described functionality. The benefits provided by such functionality are not limited to the processing circuitry alone or to other components of the computing device, but are enjoyed by the computing device as a whole, and/or by end users and a wireless network generally.

The foregoing merely illustrates the principles of the disclosure. Various modifications and alterations to the described embodiments will be apparent to those skilled in the art in view of the teachings herein. It will thus be appreciated that those skilled in the art will be able to devise numerous systems, arrangements, and procedures that, although not explicitly shown or described herein, embody the principles of the disclosure and can be thus within the scope of the disclosure. Various exemplary embodiments can be used together with one another, as well as interchangeably therewith, as should be understood by those having ordinary skill in the art.

## Claims

1. A computer-implemented method (200) for use in a low code development platform, LCDP, the method comprising:
forming (202) a credential object (101), wherein an application in the LCDP is to use the credential object (101) to access a resource, the credential object (101) comprising credential information and at least one item (105), wherein the at least one item (105) comprises:
a path (115),
a type (113), and
a replacement (117), wherein the replacement (117) indicates a value (119) that is to replace the path (115) when the credential object (101) is used by the application, and wherein the type (113) determines whether the value (119) is to be obscured in a trace (107) to a user of the application relating to the access of the resource by the application,
the method further comprising:
encrypting (204) the credential object (101) and storing the encrypted credential object (101) for use by the application to access the resource.

2. The method (200) of claim 1, wherein the method (200) further comprises:
when the application is to access the resource, using the encrypted credential object (101) to access the resource.

3. The method (200) of claim 2, wherein using the encrypted credential object (101) to access the resource comprises:
decrypting the encrypted credential object (101);
converting the decrypted credential object (101) to a text string, the text string defining the one or more replacements (117) comprised in the credential object (101);
calling a block (121) to access the resource;
inserting the one or more replacements (117) defined in the text string into a block input (602) of the block (121); and
executing the block (121) to access the resource.

4. The method (200) of claim 3, wherein the method (200) further comprises generating and displaying a trace (107) to a user of the application relating to the access of the resource by the application, wherein generating the trace (107) comprises:
for each item (105) comprising a particular predefined type (113) in the credential object (101), obscuring the replacement (117) associated with that item (105) in the trace (107).

5. The method (200) of any preceding claim, wherein each path (115) defined in the credential object (101) indicates a path defined in a block input (602) of a block (121) that is to be called and executed in order for the application to access the resource.

6. The method (200) of any preceding claim, wherein the resource is a database.

7. The method (200) of any preceding claim, wherein the replacement (117) comprises any one of a: a password, a passcode, a character string, a resource name, a path to the resource, an Internet Protocol, IP, address, a username, and a port.

8. The method (200) of any preceding claim, wherein the at least one item (105) defines information required for the application to access the resource.

9. The method (200) of any preceding claim, wherein the credential information identifies a block (121) that is to be called and executed in order for the application to access the resource .

10. The method (200) of any preceding claim, wherein the credential object (101) is stored as a software object.

11. The method (200) of claim 10, wherein the credential object (101) is stored as a JavaScript Object Notation, JSON, object.

12. A computer program product comprising a computer readable medium having computer readable code embodied therein, the computer readable code being configured such that, on execution by a suitable computer or processor, the computer or processor is caused to perform the method (200) of any of claims 1-11.

13. A computing device (1000), the computing device (1000) being configured to:
form a credential object (101), wherein an application in a Low Code Development Platform, LCDP, is to use the credential object (101) to access a resource, the credential object (101) comprising credential information and at least one item (105), wherein the at least one item (105) comprises:
a path (115),
a type (113), and
a replacement (117), wherein the replacement (117) indicates a value (119) that is to replace the path (115) when the credential object (101) is used by the application, and wherein the type (113) determines whether the replacement value (119) is to be obscured in a trace (107) to a user of the application relating to the access of the resource by the application,
the computing device (1000) being further configured to:
encrypt the credential object (101) and store the encrypted credential object (101) for use by the application to access the resource.

14. The computing device (1000) of claim 13, wherein the computing device (1000) is further configured to perform the method (200) of any of claims 2-11.
